Europäisches Patentamt

(19) European Patent Office

Office européen des brevets

(11) Numéro de publication: **0 195 725**
**B1**

(12) **FASCICULE DE BREVET EUROPEEN**

(45) Date de publication du fascicule du brevet:
26.07.89

(21) Numéro de dépôt: **86400593.9**

(22) Date de dépôt: **20.03.86**

(51) Int. Cl.⁴: **C 03 B 37/05, C 03 C 25/02**

(54) **Perfectionnement aux dispositifs de formation de fibres minérales au moyen de roues de centrifugation.**

(30) Priorité: **21.03.85 FR 8504176**

(43) Date de publication de la demande:
**24.09.86 Bulletin 86/39**

(45) Mention de la délivrance du brevet:
**26.07.89 Bulletin 89/30**

(84) Etats contractants désignés:
**DE GB SE**

(56) Documents cités:
**EP-A- 0 059 152**
**FR-A- 2 038 309**
**US-A- 2 882 552**
**US-A- 2 944 284**

(73) Titulaire: **ISOVER SAINT-GOBAIN, Les Miroirs 18, avenue d'Alsace, F-92400 Courbevoie (FR)**

(72) Inventeur: **Savary, Didier Julien Raymond, 14, rue Vigné, F-76130 Mont Saint Aignan (FR)**

(74) Mandataire: **Leconte, Jean-Gérard et al, Saint-Gobain Recherche 39, Quai Lucien Lefranc, F-93304 Aubervilliers Cedex (FR)**

## Description

L'invention est relative à un dispositif pour la fabrication de fibres minérales à partir d'une matière étirable, par centrifugation.

Il est connu des techniques, dites à centrifugation libre, dans lesquelles le matériau à fibrer est conduit à l'état fondu de l'extérieur à la périphérie de roues de fibrage et est entraîné par ces roues pour s'en détacher sous forme de fibres sous l'effet de la force centrifuge.

Dans ces techniques on utilise en général 3 ou 4 roues de centrifugation disposées à proximité l'une de l'autre. Le matériau fondu est déversé sur une première roue, est accéléré et est envoyé sur la roue suivante. Le matériau étirable passe ainsi d'une roue à l'autre, chaque roue transformant en fibres une partie du matériau fondu et renvoyant l'excédent sur la roue suivante.

Ces techniques sont plus spécialement employées pour la production industrielle de laine de roche à partir de verres basaltiques, de laitiers de hauts fourneaux ou plus généralement de tous materiaux avec un point de fusion très élevé.

De nombreuses améliorations ont été proposées pour ces techniques, il convient ici de mentionner spécialement celles faisant l'objet de la demande de brevet européen EP-A1-0 059 152.

Les roues de centrifugation sont soumises à des températures élevées en raison du contact qui s'opère avec le matériau fondu .Ces températures élevées ne doivent pas toutefois être telles qu'elles entraînent une déformation et/ou une usure préjudiciable à la longévité de ces roues. C'est pourquoi des dispositifs traditionnels décrits dans la demande précitée comportent des moyens de refroidissement, constitués en particulier par l'aménagement d'une circulation d'eau par l'arbre de la roue et jusqu'à la face interne de la partie périphérique de la roue.

Pour amener l'eau de refroidissement jusqu'aux moyeux de la roue, une canalisation d'alimentation est de préférence disposée dans l'arbre, co-axialement à celui-ci. Cette canalisation d'alimentation est immobile, et maintenue par des jeux de roulements dans l'arbre de la roue qui lui est en rotation rapide. Ces roulements sont habituellement situés à l'extrémité de la canalisation, du côté de la roue. Des joints assurent l'étanchéité du circuit de refroidissement et protègent ces roulements.

La vitesse de rotation des roues étant très élevée, les roulements maintenant la canalisation d'alimentation sont fortement sollicités, d'autant qu'en dépit des joints d'étanchéité, il est difficile de les protéger parfaitement dans les conditions habituelles de fonctionnement. Aussi ces roulements s'usent-ils très rapidement et doivent être très fréquemment remplacés pour éviter des grippages qui entraîneraient une rupture de la canalisation d'alimentation.

D'autre part, il est connu du brevet US-A-2 882 552 un dispositif de fibrage constitué par une roue de centrifugation refroidie par de l'eau acheminée dans l'axe de l'arbre de la roue par une vis sans fin. L'entrée de la canalisation ainsi formée est entourée d'un carter pour l'écoulement du trop plein, indiquant ainsi que ce système n'est pas étanche et ne peut donc convenir pour l'acheminement des débits d'eau très importants nécessités par de forts tonnages ou par des débits de composition en liants.

Un but de la présente invention est de proposer une technique améliorée d'alimentation en eau de refroidissement des roues de centrifugation, permettant notamment d'allonger considérablement la durée de vie du dispositif.

Les inventeurs ont montré que des résultats très satisfaisants pouvaient être obtenus en utilisant des canalisations d'alimentation solidaires des roues de centrifugation correspondantes et sans pour autant recourir à des joints tournants qui constitueraient un nouveau point faible de l'installation compte tenu des vitesses atteintes.

Conformément au préambule de la revendication connu de EP-A1-59 152, l'invention s'applique à un dispositif pour la fabrication de fibres minérales à partir d'une matière étirable à point de fusion très élevé, déversée à l'état fondu sur une première roue de centrifugation avant d'être envoyée sur une roue suivante, chaque roue transformant en fibres une partie de la matière fondue et renvoyant l'excédent sur la suivante, une canalisation d'alimentation en eau de refroidissement étant disposée dans l'axe de l'arbre de chaque roue de centrifugation, les roues de centrifugation étant outre munies d'une canalisation d'alimentation en composition de liants, entourée concentriquement par la canalisation d'alimentation en eau de refroidissement et se caractérise selon l'invention en ce que la canalisation d'alimentation en eau de refroidissement est solidairement entraînée dans le mouvement de rotation de ladite roue et est pourvue de moyens dont la rotation fait progresser l'eau de refroidissement et en ce que la canalisation d'alimentation en composition de liants est placée solidairement à l'intérieur de la canalisation en eau de refroidissement et est pourvue de moyens dont la rotation fait progresser la composition de liants.

Selon l'invention, l'alimentation en eau de refroidissement de chacune des roues de centrifugation est réalisée au moyen d'une canalisation disposée dans l'axe de l'arbre de la roue et solidairement entraînée dans le mouvement de rotation de la roue de centrifugation.

Cette canalisation est pourvue de moyens dont le mouvement de rotation fait progresser l'eau de refroidissement en direction de la roue. Ces moyens sont solidaires de la canalisation et se présentent de préférence sous la forme d'une paroi formant une vis hélicoïdale, mais d'autres moyens équivalents peuvent être utilisés à cet effet notamment des pales ou ailettes telles que celles utilisées pour constituer un rotor de turbine. Le mouvement peut aussi être communiqué par une ou plusieurs rainures hélicoïdales creusées dans la paroi de la canalisation.

A l'extrémité de l'arbre qui ne porte pas la roue de centrifugation, la canalisation conduisant l'eau de refroidissement est associée à des moyens d'injection coordonnés. Il s'agit par exemple d'une buse disposée face à l'extrémité de la canalisation. A cette extrémité la canalisation est ouverte, aucun joint tournant n'est amenagé pour assurer l'étanchéité entre la buse d'injection et la canalisation. Tout au plus, pour faciliter la continuité des moyens conduisant l'eau de refroidissement, la buse peut s'avancer à l'intérieur de la canalisation mais sur une faible distance seulement pour éviter tout risque de contact entre la canalisation en rotation et la buse fixe.

L'eau introduite dans la canalisation est rapidement au contact des moyens assurant sa progression pour éviter un reflux. Dans le cas où les moyens en question ne s'étendent que sur une partie seulement de la longueur de la canalisation, ils seront donc de préférence situés à proximité de cette extrémité par laquelle l'eau est introduite.

Le débit maximum d'alimentation est fonction du diamètre intérieur de la canalisation, de la vitesse de rotation de la roue de centrifugation et du pas de l'hélice.

La vitesse de rotation est commandée par des considérations relatives à la formation des fibres et n'est donc pas réglable de façon indépendante. Au contraire, dans certaines limites le diamètre de la canalisation et le pas de l'hélice ou des moyens équivalents peuvent être modifiés autant que de besoin.

Lorsque la capacité maximum de la canalisation correspond au débit d'eau injectée dans les conditions d'utilisation choisies, le «pompage» réalisé par la canalisation s'effectue sans désamorçage. Un tel régime peut être obtenu en intervenant aussi sur le débit d'eau injectée. Dans l'hypothèse inverse, lorsque le débit injecté est inférieur à ce maximum et donc que la canalisation n'est pas totalement rempli, les risques de reflux sont pratiquement inexistants, d'une part du fait que la canalisation est dans une position horizontale et d'autre part de ce que, comme nous l'avons indiqué, les moyens entraînant le liquide sont situés immédiatement à l'origine. Le liquide injecté avec une certaine vitesse est aussitôt repris par ces moyens qui l'envoyent en direction de la roue. Dans ces conditions, la présence d'air dans la canalisation est sans effet sur un bon fonctionnement.

Par ailleurs, lorsque les fibres produites sont destinées à la fabrication de matelas isolants, cas le plus courant, elles doivent être enduites par pulvérisation d'une solution liquide de liants, par exemple du type résines formophénoliques, qui après polymerisation confèrent au produit final ses propriétés mécaniques et sa cohésion. Cette enduction doit être la plus homogène possible et ne pas perturber l'opération de fibrage proprement dite. Une solution particulièrement bien adaptée est fournie dans la demande européene précitée. Elle propose l'utilisation d'un organe de projection par centrifugation du liant, qui prend notamment la forme d'un disque accolé à la roue sur laquelle se forment les fibres. Ce disque se compose de deux flasques accolées et qui déterminent un compartiment en communication avec l'extérieur par un ou plusieurs orifices d'où s'échappe la composition de liants en direction des fibres qui viennent juste d'être formées. La composition de liants est acheminée jusqu'à ce compartiment par un conduit d'alimentation disposé également dans l'arbre de la roue.

Avantageusement, on utilise des canalisations d'alimentation en eau et en liants concentriques. De préférence, la canalisation d'eau entoure celle de liants, la composition de liants étant ainsi protégée d'une éventuelle augmentation de température avant pulvérisation.

Dans la technique antérieure, la canalisation pour l'alimentation en liants, située dans celle d'alimentation en eau, est comme celle-ci immobile à l'intérieur de l'arbre.

Selon l'invention lorsqu'il convient d'introduire simultanément de l'eau de refroidissement et du liant, on dispose les deux canalisations concentriquement dans l'axe de l'arbre dont elles sont solidaires.

Des moyens analogues à ceux qui ont été décrits à propos de l'alimentation en eau sont utilisés sur la canalisation du liant. En particulier, chacune de ces canalisations est pourvue de moyens tels qu'une hélice pour faire progresser le liquide, et l'introduction du liquide se fait par injection à l'extrémité ouverte de la canalisation. Dans ce cas, il va de soi qu'une des buses d'injection est disposée suivant l'axe de la canalisation alimentée par elle, et que l'autre buse se trouve décentrée. Il est possible aussi d'utiliser comme deuxième buse une buse d'injection de forme annulaire entourant la première buse.

D'autres particularités de l'invention apparaîtront dans la description détaillée suivante, faite en référence aux dessins annexés dans lesquels:

– la figure 1 présente en perspective, de façon schématique un dispositif de fibrage du type utilisé selon l'invention,

– la figure 2a du type est une coupe schématisée d'une roue de centrifugation comprenant un ensemble d'alimentation en eau de refroidissement et en composition de liants selon la technique antérieure,

– la figure 2b est une coupe schématisée analogue à la précédente comprenant un ensemble d'alimentation selon l'invention,

– la figure 3 est une coupe détaillée de la zone d'injection d'un ensemble d'alimentation selon l'invention,

– la figure 4 est une vue partielle en coupe de l'extrémité du dispositif portant la roue de fibrage.

La description qui suit est plus spécialement relative au cas où une composition de liants est également injectée par l'arbre mais il va de soi que les solutions présentées pourraient aussi être utilisées avec des aménagements éventuels mais qui ne sortiraient pas du cadre de la présente invention.

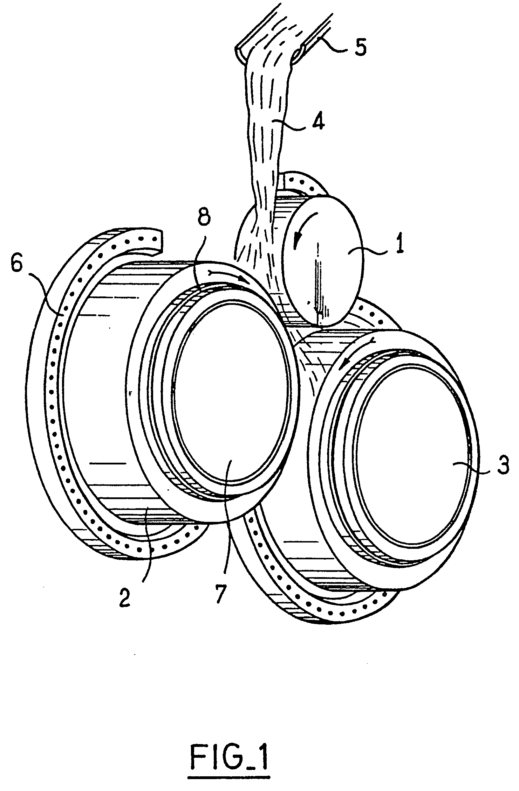

Sur la figure 1 on a représenté un dispositif de fibrage du type utilisé selon l'invention et qui comprend trois roues de centrifugation 1, 2, 3, deux roues successives tournant en sens inverse l'une de l'autre. Des dispositifs du même type à quatre roues de centrifugation sont aussi couramment utilisés. Le matériau étirable 4, à l'état fondu, est déversé par une goulotte 5 sur la première roue de centrifugation 1 qui est encore appelée roue de distribution car elle ne produit pratiquement pas de fibres et a essentiellement pour rôle d'accélérer et de distribuer le matériau fibrable 4 sur la roue suivante 2 sur laquelle il est envoyé et y adhère partiellement. Le matériau fondu adhérant se détache de la roue 2 sous l'effet de la force centrifuge et forme alors des filaments qui sont entraînés par le courant gazeux engendré par les orifices de la couronne de soufflage 6, alors que le matériau non adhérant est renvoyé à la roue de centrifugation suivante 3 pour la production, de la même manière, d'un complément de fibres.

Le courant gazeux portant les fibres est dirigé transversalement au sens de projection des fibres hors de la roue. Grâce à l'organe de projection 7, la composition de liants est projetée par centrifugation sous forme de gouttelettes dans le courant gazeux qui la divise finement de sorte que les fibres formées sont uniformément enduites.

L'organe de projection 7 est de préférence entouré d'une colerette 8 qui protège des fibres des orifices.

Ces roues de centrifugation sont refroidies à l'eau, de préférence avec des débits en eau de refroidissement réglés pour chaque roue en fonction de la température d'équilibre à atteindre. Normalement la température des roues au contact du matériau fondu va en décroissant de la première 1 à la dernière 3.

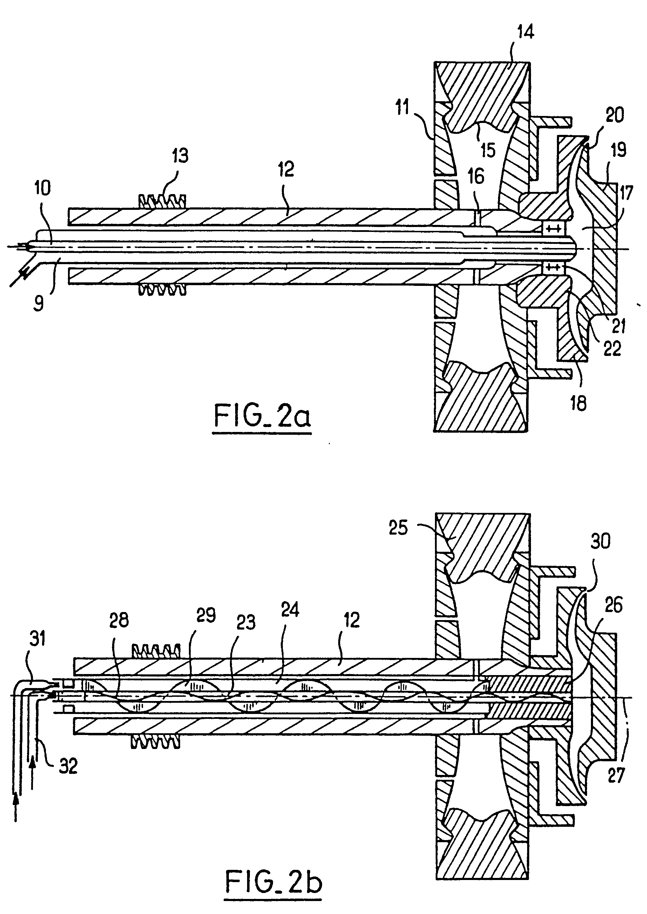

L'alimentation en eau de refroidissement et en composition de liants est réalisée au moyen de canalisations concentriques représentées aux figures 2a et 2b.

Selon un dispositif de l'art connu, schématisée à la figure 2a les canalisations d'alimentation en eau de refroidissement 9 et en composition de liants 10 sont montées immobiles et disposées dans l'arbre 12 suivant l'axe de rotation de la roue de centrifugation 11 correspondante. Cette roue 11 est mise en rotation par l'intermédiaire de l'arbre 12, mouvement transmis d'un moteur ici non représenté par des courroies disposées dans les gorges de la poulie 13.

La roue de centrifugation 11 comporte une bande périphérique 14, lisse sur le schéma mais en pratique cette bande porte de préférence des aspérités, rainures etc. qui facilitent l'adhérence du matériau fondu. Sa face interne 15 est exposée à l'eau de refroidissement acheminée tout d'abord par la canalisation 9 puis par une série d'orifices 16 percés dans l'arbre 12.

La composition liquide de liants, acheminée par la canalisation 10 pénètre dans l'atomiseur 22 qui comprend le compartiment 17, délimité par les flasques accolés 18 et 19, la composition de liants s'échappe sous l'effet de la force centrifuge par les orifices 20.

Le centrage sur l'axe de l'arbre 12 et le maintien en position voulue des deux canalisations concentriques 9 et 10 est assuré par au moins un roulement 21 monté sur l'atomiseur 22.

A l'expérience ce roulement est apparu comme à l'origine de la rupture fréquente des canalisations d'alimentation.

Selon l'invention et telles représentées à la figure 2b, les canalisations d'alimentation en composition de liants 23 et en eau de refroidissement 24 sont montées solidaires de l'arbre 12 entraînant la roue de centrifugation 25 par des moyens 26 qui assurent en permanence un parfait centrage sur l'axe de rotation 27 de ces canalisations 23 et 24; la canalisation 24 en eau de refroidissement entoure la canalisation 23 en composition de liants afin de préserver celle-ci de tout échauffement indésirable.

Pour assurer la progression des compositions liquides dans ces canalisations, celles-ci sont munies chacune d'une hélice respectivement 28 et 29. Ces hélices jouent un rôle de pompe à la manière d'une vis d'archimède, et permettent d'acélérer les liquides suffisamment pour qu'ils atteignent la roue de centrifugation 25, pour ce qui concerne l'eau de refroidissement, et l'organe de projection ou atomiseur 30 pour ce qui concerne la composition de liants. Avec les vitesses de rotation utilisées, les deux pompes ainsi formées ont une aspiration suffisante pour éviter un refoulement des liquides vers les injecteurs d'eau 31 et de composition en liants 32, disposés chacun à l'extrémité respectivement des canalisations 23 et 24.

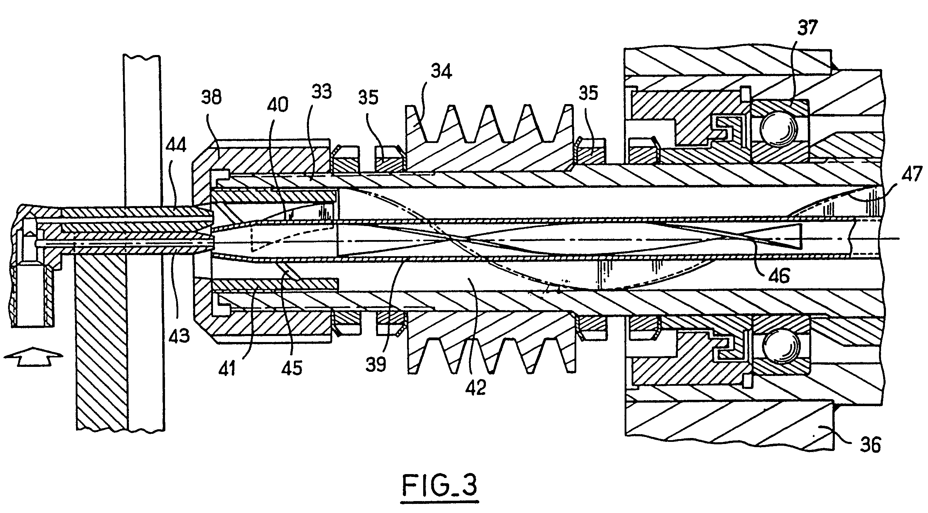

La figure 3 est une coupe détaillée de la zone d'injection d'un ensemble d'alimentation selon l'invention.

Un moteur, ici non représenté et de préférence hors de la zone de fibrage où son fonctionnement serait perturbé par les fibres formées, met en mouvement l'arbre 33 de la roue de centrifugation. Ce mouvement de rotation est transmis à l'arbre 33 par la poulie 34, maintenue correctement positionnée sur l'arbre par les contre-écrous 35.

L'arbre 33 est porté par un palier à roulement 37 disposé sur le bâti 36. Au centre de l'arbre 33, est disposé le tube 39 dans lequel circule la composition de liants. La paroi interne de l'arbre 33 et la paroi externe du tube à liant 39 déterminent la canalisation annulaire 42 dans laquelle circule l'eau de refroidissement de la roue de centrifugation.

Ce tube 39 est centré par trois aillettes 40 dont le manchon support 41 est vissé sur un filetage intérieur de l'arbre 33. Outre leur fonction de centrage, ces aillettes 40 ont aussi pour rôle de créer une turbulence qui facilite l'acheminement de l'eau de refroidissement vers la roue de centrifugation. Pour eviter toute accumulation d'eau à ce niveau, le manchon 41 comporte également trois rainures d'évacuation 45.

Un capuchon 38 vissé sur la face externe de l'arbre 33 bloque le manchon 41 dans sa position.

Les compositions de liquides sont envoyées dans l'arbre par l'injecteur 43 pour le liant et l'injecteur 44 pour l'eau de refroidissement. De préférence ces injecteurs pénètrent partiellement à l'intérieur de l'arbre et donc du tube à liants 39, l'injection du fluide de refroidissement est de plus facilitée par l'extrémité tronconique du tube 39 qui agrandit la section d'entrée du fluide de refroidissement.

La circulation des compositions liquides est assurée respectivement par les hélices 46 et 47.

Pour la composition de liant l'hélice 46 est placée à l'intérieur du tube 39. Etant donné le faible diamètre de ce tube, il n'est pas nécessaire que l'hélice 46 soit sur toute la longueur du tube, la composition de liant admise en continu est automatiquement refoulée en direction de la roue. L'hélice 46 peut être fixée par brasure sur le tube 39 ou tout simplement être placée en force.

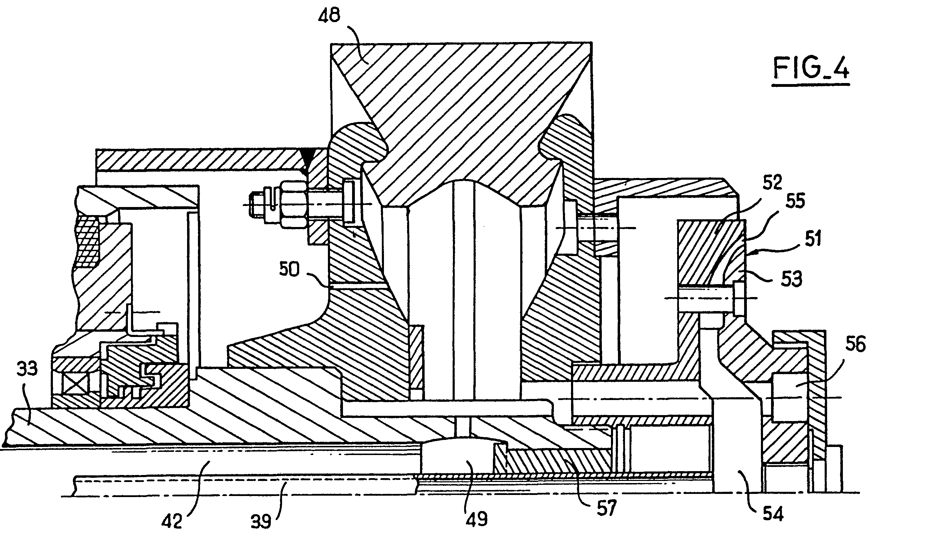

Le tube 39 porte également sur sa paroi externe l'hélice 47 de préférence fixée par brasure. Cette hélice, qui sur les figures 3 et 4 s'étend sur toute la longueur du tube 39, fait progresser l'eau de refroidissement.

On a ici représenté des hélices 46 et 47 de même pas, encore qu'il ne s'agisse pas là d'une quelconque obligation. A un pas de 20 cm correspond par exemple à une vitesse de circulation des compositions liquides de 20 m/s pour une vitesse de rotation de l'ordre de 6000 t/mn. Or comme on utilise de 300 à 400 litres d'eau par heure pour le refroidissement et entre 150 et 500 litres par heure de composition de liant, les vitesses d'entrée des compositions de liquides sont environ comprises entre 12 et 16 m/s pour l'eau de refroidissement et de 6 à 20 m/s pour la composition de liants, et ceci avec des injecteurs présentant un diamètre d'ouverture de 3 mm. Ainsi la vitesse de circulation des compositions liquides est toujours supérieure ou égale à leur vitesse d'entrée et aucun refoulement ne se produit, mais au contraire une certaine quantité d'air est également aspirée.

Ce système d'hélices présente une grande souplesse d'emploi, en effet si pour des raisons diverses par exemple des débits de compositions liquides plus importants doivent être injectés, il suffit de remplacer le tube à composition de liants 39 par un tube doté d'hélices de pas plus importants.

L'autre extrémité de l'arbre 33 est représentée sur la figure 4 qui est une demi-coupe supérieure de la roue de centrifugation. Sur l'arbre 33 est montée la roue de centrifugation 48.

Le refroidissement de la roue de centrifugation 48 et plus spécialement de sa surface périphérique est assuré par l'eau amenée par la canalisation 42 jusqu'à la chambre 49 qui est fermée à droite par la bague 57 qui d'une part empêche l'eau de se mélanger avec la composition de liants, et d'autre part fixe le tube 39 qui est ainsi rendu solidaire de l'arbre de la roue de centrifugation.

Au contact de la roue 48, une partie de l'eau se vaporise, et le mélange d'eau et de vapeur obtenu est entraîné par la force centrifuge au travers des orifices 50.

La composition de liant circulant dans le tube 39 est amenée jusqu'à l'organe de projection 51, formé de deux flasques accolés 52 et 53 qui délimitent un compartiment 54 dans lequel le liant pénètre avant de s'échapper par les orifices 55. Cet organe de projection est vissé sur la tête de l'arbre 33, et arrêté en rotation par les vis 56.

Le dispositif de refroidissement et d'alimentation en composition de liants qui a été décrit ne comporte donc plus aucun roulement ou joint d'étanchéité spécifique de ce dispositif. Ainsi la durée de vie du dispositif de fibrage est nettement allongée et de plus le dispositif amélioré selon l'invention présente l'avantage d'une très grande souplesse car il autorise une très grande variation des débits de compositions liquides injectées.

**Revendications**

1. Dispositif pour la fabrication de fibres minérales à partir d'une matière étirable (14) à point de fusion très élevé, déversée à l'état fondu sur une première roue (1) de centrifugation avant d'être envoyée sur une roue suivante (2, 3), chaque roue (1, 2, 3) transformant en fibres une partie de la matière fondue et renvoyant l'excédent sur la suivante, une canalisation (9, 24) d'alimentation en eau de refroidissement étant disposée dans l'axe de l'arbre (12) de chaque roue de centrifugation (1, 2, 3), les roues (1, 2, 3) de centrifugation étant outre munies d'une canalisation (10, 23) d'alimentation en composition de liants, entourée concentriquement par la canalisation (9, 24) d'alimentation en eau de refroidissement, caractérisé en ce que la canalisation (9, 24) d'alimentation en eau de refroidissement est solidairement entraînée dans le mouvement de rotation de ladite roue (1, 2, 3) et est pourvue de moyens (29) dont la rotation fait progresser l'eau de refroidissement et en ce que la canalisation (23) d'alimentation en composition de liants est placée solidairement à l'intérieur de la canalisation (24) en eau de refroidissement et est pourvue de moyens (28) dont la rotation fait progresser la composition de liants.

2. Dispositif selon la revendication 1, caractérisé en ce que lesdits moyens de progression (29) sont sous la forme d'une paroi solidaire de la canalisation d'alimentation en eau de refroidissement et formant une vis hélicoïdale.

3. Dispositif selon la revendication 2, caractérisé en ce que lesdits moyens de progression (29) sont placés à proximité de l'extrémité de la canalisation par laquelle l'eau est introduite.

4. Dispositif selon une des revendications 1 à 3, caractérisé en ce que des moyens d'injection (41) de l'eau de refroidissement sont situés à l'extrémité de l'arbre (12) ne portant pas la roue de centrifugation.

5. Dispositif selon la revendication 4, caractérisé en ce que lesdits moyens d'injection (31) s'avancent sur une faible distance à l'intérieur de la canalisation d'alimentation (24) en eau de refroidissement.

6. Dispositif selon une des revendications 1 à 5, caractérisé en ce que la canalisation d'alimentation en eau de refroidissement (42) est formée par l'arbre (33) creux de la roue de centrifugation.

7. Dispositif selon la revendication 6, caractérisé en ce que la canalisation (39) d'alimentation en composition de liants est fixée solidairement à l'arbre (33) de la roue de centrifugation par une bague (57).

8. Dispositif selon une des revendications précédentes, caractérisé en ce que la canalisation d'alimentation (39) en composition de liants est pourvue d'une paroi (46) qui lui est solidaire et formant une vis hélicoïdale.

9. Dispositif selon une des revendications précédentes, caractérisé en ce que la canalisation (39) d'alimentation en composition de liants présente à son extrémité opposée à la roue de centrifugation une forme tronconique.

## Patentansprüche

1. Vorrichtung zur Herstellung von Mineralfasern, ausgehend von einem bei sehr hohem Schmelzpunkt ausziehbaren Material (14), das in geschmolzenem Zustand auf ein erstes Schleuderrad (1) gegossen wird, bevor es auf ein nächstes Rad (2, 3) geleitet wird, wobei jedes Rad (1, 2, 3) einen Teil des geschmolzenen Materials in Fasern umwandelt und den Überschuß auf das nächste weitergibt, mit einer Kühlwasserspeiseleitung (9, 24), die in der Achse der Welle (12) jedes Schleuderrades (1, 2, 3) angeordnet ist, wobei die Schleuderräder (1, 2, 3) außerdem mit einer Speiseleitung (10, 23) für eine Bindemittelzusammensetzung versehen sind, die konzentrisch von der Kühlwasserspeiseleitung (9, 24) umgeben ist, dadurch gekennzeichnet, daß die Kühlwasserspeiseleitung (9, 24) drehfest verbunden mit der Drehbewegung des besagten Rades (1, 2, 3) mitgenommen wird und mit einer Einrichtung (29) versehen ist, deren Drehung ein Fördern des Kühlwassers bewirkt und daß die Speiseleitung (23) für die Bindemittelzusammensetzung drehfest verbunden im Inneren der Kühlwasserspeiseleitung (24) angeordnet und mit einer Einrichtung (28) versehen ist, deren Drehung ein Fördern der Bindemittelzusammensetzung bewirkt.

2. Vorrichtung nach Anspruch 1, dadurch gekennzeichnet, daß die Fördereinrichtung (29) in Form einer drehfest verbundenen Wand der Kühlwasserspeiseleitung vorliegt und eine Schraubenhelix bildet.

3. Vorrichtung nach Anspruch 2, dadurch gekennzeichnet, daß die Fördereinrichtung (29) in der Nähe des äußeren Endes der Leitung, durch die das Wasser eingeführt wird, angeordnet ist.

4. Vorrichtung nach einem der Ansprüche 1 bis 3, dadurch gekennzeichnet, daß eine Einspritzeinrichtung (41) für das Kühlwasser am äußeren Ende der Welle (12), welches das Schleuderrad nicht trägt, angeordnet ist.

5. Vorrichtung nach Anspruch 4, dadurch gekennzeichnet, daß die Einspritzeinrichtung (31) eine kurze Strecke in das Innere der Kühlwasserspeiseleitung (24) ragt.

6. Vorrichtung nach einem der Ansprüche 1 bis 5, dadurch gekennzeichnet, daß die Kühlwasserspeiseleitung (42) von der Hohlwelle (33) des Schleuderrades gebildet ist.

7. Vorrichtung nach Anspruch 6, dadurch gekennzeichnet, daß die Speiseleitung (39) für die Bindemittelzusammensetzung über einen Ring (57) an der Welle (33) des Schleuderrades starr befestigt ist.

8. Vorrichtung nach einem der vorhergehenden Ansprüche, dadurch gekennzeichnet, daß die Speiseleitung (39) für die Bindemittelzusammensetzung mit einer Wand (46) versehen ist, die fest mit ihr verbunden ist und eine Schraubenhelix bildet.

9. Vorrichtung nach einem der vorhergehenden Ansprüche, dadurch gekennzeichnet, daß die Speiseleitung (39) für die Bindemittelzusammensetzung an ihrem dem Schleuderrad entgegengesetzten äußeren Ende eine kegelstumpfförmige Form aufweist.

## Claims

1. A device for the manufacture of mineral fibres from a material (14) with a very high melting point, which can be drawn, and which is poured in the molten state on to a first centrifuging wheel (1) before being sent to a subsequent wheel (2, 3), each wheel (1, 2, 3) converting some of the molten material into fibres and sending the excess to the next wheel, a duct (9, 24) for supplying cooling water being disposed on the axis of the shaft (12) of each centrifuging wheel (1, 2, 3), and each centrifuging wheel (1, 2, 3) also being provided with a supply duct (10, 23) for a binder composition, which is surrounded concentrically by the cooling-water supply duct (9, 24), characterised in that the cooling-water supply duct (9, 24) is fixed for rotation with the wheel (1, 2, 3) and is provided with means (29) the rotation whereof makes the cooling water advance, and in that the binder-composition supply duct (23) is firmly fixed within the cooling-water duct (24) and is provided with means (28) the rotation whereof makes the binder composition advance.

2. A device according to claim 1, characterised in that the said means of advance (29) are in the form of a wall which is fixed to the cooling-water supply duct and forms a helical screw.

3. A device according to claim 2, characterised in that the said means (29) of advance are located near that end of the duct through which the water is introduced.

4. A device according to one of claims 1 to 3, characterised in that means (41) for injecting the cooling water are located at that end of the shaft (12) which does not carry the centrifuging wheel.

5. A device according to claim 4, characterised in that the said injection means (31) project a short distance into the cooling-water supply duct (24).

6. A device according to one of claims 1 to 5, characterised in that the cooling-water supply duct (42) is formed by the hollow shaft (33) of the centrifuging wheel.

7. A device according to claim 6, characterised in that the binder-composition supply duct (39) is fixed firmly to the shaft (33) of the centrifuging wheel by a sleeve (57).

8. A device according to one of the preceding claims, characterised in that the binder-composition supply duct (39) is provided with a wall (46) which is firmly fixed thereto and forms a helical screw.

9. A device according to one of the preceding claims, characterised in that the end of the binder-composition supply duct opposite the centrifuging wheel is frusto-conical in shape.

FIG_1

FIG. 2a

FIG. 2b

FIG.3

FIG_4

EP 0195725 B1